# EUROPEAN PATENT SPECIFICATION

(11) **EP 3 984 344 B1**
(45) Date of publication and mention of the grant of the patent: **24.04.2024**
(21) Application number: 21202597.7
(22) Date of filing: 14.10.2021
(51) Int. Cl.: A01D 34/42, A01D 34/62

(54) **IMPROVED AGRICULTURAL MACHINE FOR CUTTING AND CRUSHING RESIDUAL MATERIALS**
VERBESSERTE LANDWIRTSCHAFTLICHE MASCHINE ZUM SCHNEIDEN UND ZERKLEINERN VON RESTSTOFFEN
MACHINE AGRICOLE AMÉLIORÉE POUR LA COUPE ET LE BROYAGE DE MATÉRIAUX RÉSIDUELS

(30) Priority: 15.10.2020 IT 202000024322
(43) Date of publication of application: 20.04.2022
(73) Proprietor: Torrico S.r.l., 36053 Gambellara (VI) (IT)
(72) Inventor: PEGORARO, Luciano, 36040 SAREGO (VI) (IT)
(74) Representative: Burchielli, Riccardo

(56) References cited:
- FR-A1- 2 851 123
- IT-A1- VI20 080 298
- IT-A1- VI20 090 056
- US-A- 3 133 598
- US-B1- 7 047 714

## Description

This invention generally refers to an improved agricultural machine for the cutting and crushing of residual materials.

More specifically, the invention relates to a multipurpose agricultural shredding machine, usable as a simple shredding machine or as a cane shredder machine or as a stalk shredder, of an improved type, applicable to a suitable operating machine, by means of a three-point hitch, and usable for cutting grass, shrubs, vine branches, for shredding pruning residues from vineyards and/or orchards and crop residues of corn, beet, rice, sunflower and other herbaceous plants, as well as for the maintenance of road edges, meadows, parks, gardens and embankments.

Agricultural shredders are still known, in particular of the rotary type, which can be used for cutting and shredding or fragmentation of materials or crop residues of agricultural land; in this way, the crop residues are removed and reduced in size, leaving the soil free, while the shredded organic material generally remains on the soil becoming a natural fertiliser for the surrounding crops.

Traditional shredding machines usually comprise an external support frame, a shredding unit, operating inside a fixed containment frame and generally consisting of a rotating drum or rotor, equipped with peripheral, removable and interchangeable knives, which pick up the residues from the ground and shred them cooperating with respective counter-knives fixed on the frame of the machine, and a rear guide roller.

These prior art shredding machines are generally connected, by means of suitable fastening means, to respective operating machines, which pull them along the ground on which the residual products to be shredded are present and which supply the motion signal to the rotating shredding drum, by means of suitable transmission means, and may also have one or more doors, which can be opened on the frame, to carry out maintenance interventions, and/or side protections and/or devices for displacement or lateral and/or rear inclination, of the hydraulic or mechanical type, for lateral and/or rear processing operations.

In the traditional shredding machines, the high number of revolutions of the rotor and the presence of fixed counter-knives, which act in cooperation with the hammers and knives mounted on the rotor, guarantee a good crushing of the product, however, especially in the presence of dry and hard material, the crushing is not yet entirely optimal.

Furthermore, the presence of deflectors, which in traditional machines are usually placed on the hood of the machine, in order to spread the shredded material outside, determines considerable overall dimensions during processing and also constitutes a risk for the solidity of the frame of the machine.

Furthermore, the transmission systems used for the operation of traditional type shredding machines comprise, in almost all cases, various modules which communicate and cooperate with each other through multiple connection and signal transmission elements such as, for example, various cardan joints; what has been said so far consequently makes the transfer of the signal inside the shredding machine complex and not always optimal. In addition to the above, the large number of components that make up the currently known shredding machines make the structure very complex, not allowing the machine to be totally compact and therefore easy to use, in particular, when it is connected, by way of example, to an operating machine, such as a tractor.

The relevant prior art also includes patent application ITVI20080298A1 describing an agricultural machine for cutting and crushing residual materials.

Within the scope of the above-mentioned requirements, therefore, the aim of the invention is to provide an improved agricultural machine for the cutting and the crushing of residual materials, which overcomes the above-mentioned drawbacks and, in particular, to provide an improved agricultural machine for the cutting and the crushing of residual materials which allows an optimum crushing of the product to be carried out easily and effectively, whether it is made up of moist and abundant material or whether it is made up of dry and hard material.

Another aim of the invention is to provide an improved agricultural machine for the cutting and crushing of residual materials, which is extremely versatile, which has reduced dimensions with respect to traditional machines of the same type and which guarantees extremely safe operating conditions.

A further aim of the invention is to provide an improved agricultural machine for the cutting and crushing of residual materials, which has a compact structure and which is simple and inexpensive to manufacture, using simple technologies, raw materials and relatively inexpensive components in relation to the benefits achieved.

Not least, an aim of the invention is to provide an agricultural machine for the cutting and crushing of residual materials which has a structure such as to allow an optimal signal transfer and therefore less complex in terms of process.

These and other aims, according to the invention, are achieved by providing an improved agricultural machine for the cutting and crushing of residual materials according to appended claim 1.

Other detailed technical features are described in the following claims. Further characteristics and advantages of a an improved agricultural machine for the cutting and crushing of residual materials, according to the invention, will more fully emerge from the description that follows, relative to a preferred embodiment thereof given by way of non-limiting example of the improved cutting and crushing machine, and with reference to the appended drawings, in which:
- Figure 1a is a schematic perspective view of an improved agricultural machine for the cutting and crushing of residual materials according to the invention;
- Figure 1b is a side view of a detail of the agricultural machine of Figure 1a;
- Figure 2 is a schematic perspective and rear view of the improved agricultural machine for the cutting and crushing of residual materials, of Figure 1a, according to the invention;
- Figure 3 is a side and partially sectional view of the transmission system forming part of the improved agricultural machine for the cutting, according to the invention;

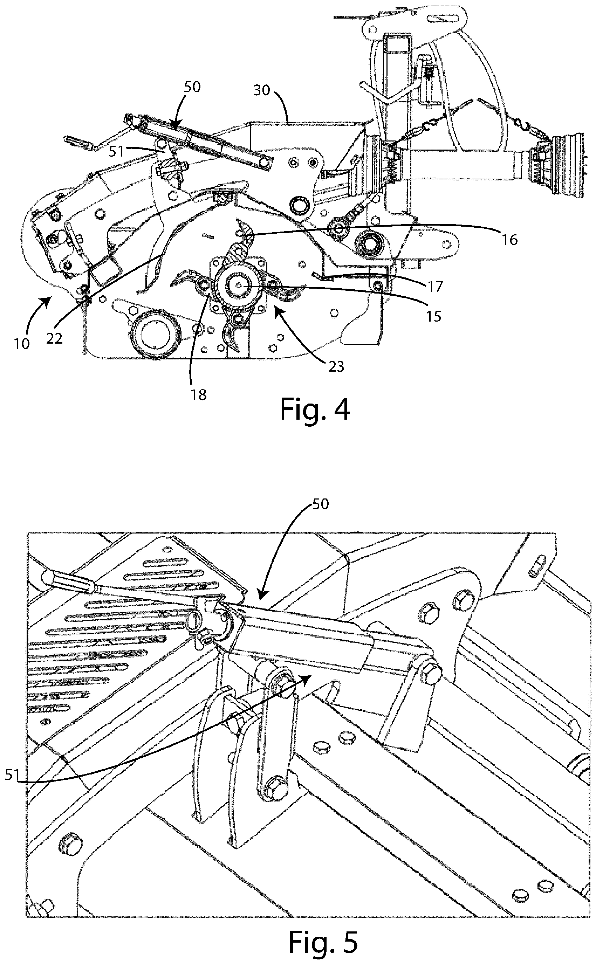

- Figure 4 is a side view, partly in cross-section, of the improved agricultural machine for the cutting and crushing of residual materials, according to the invention;
- Figure 5 shows a perspective view of a detail relative to the agricultural machine in Figure 4, according to the invention.
- Figure 6a is a side view of the agricultural machine of figure 4, relating to a first operating condition wherein the machine, according to the invention, carries out a double crushing of the product;
- Figure 6b shows a side view of the agricultural machine of Figure 4, in a second operating condition, according to which the improved agricultural machine for the cutting and crushing of residual materials, according to the invention, carries out a single crushing of the product;
- Figure 7 is a top view of the agricultural machine of Figure 1a, in which the longitudinal section lines 88 are highlighted;
- Figure 8A is a side and partially sectional view, according to lines B-B, of the agricultural machine of Figure 7, in a first position of use;
- Figures 8B and 8C are, respectively, two detailed views of the positioning and inclination of the slots present on the agricultural machine, in said first position of use;
- Figure 9A shows a side and partially sectional view, according to lines B-B, of the agricultural machine of Figure 7, in a further position of use;
- Figures 9B and 9C are, respectively, two detailed views of the positioning and inclination of the above-mentioned slots, in the further position of use;
- Figure 10 shows a further perspective view of the improved agricultural machine for the cutting and crushing of residual materials, of Figure 1a, according to the invention;
- Figure 11 shows a detailed and partially exploded view of a detail of the positioning of the slots and of the relative pins.

Firstly it should be noted that, even if the following description and the attached drawings refer to a generic agricultural shredding machine, the innovative concept of the invention similarly extends to stalk shredders and/or cane shredders, also with hydraulic or mechanical lateral displacement, which can be used for shredding maize, straw, grass, bushes, prunings, crop residues and pruning residues in general, small and large, and can also be used for the maintenance of road edges, lawns, parks, gardens and embankments.

With reference to the above-mentioned drawings, the improved agricultural machine for the cutting and crushing of residual materials, which is the subject of the invention, comprises an external frame 10, provided with side plates 12, which is mechanically connected to means 11 for attachment or fastening to a towing machine, and also includes at least one rear guide roller 14, which allows it to advance over the ground, on which the residual materials to be collected and shredded are present.

A unit 23 for shredding residual material is installed inside the frame 10, including a rotating drum or rotor 15, provided with peripheral shredder knives 16, which act in conjunction with respective shredder counter-knives 17, associated with internal portions of the frame 10 of the agricultural machine, designed to perform the double function of collecting and shredding residual materials.

Each of the peripheral shredder knives 16 consists of a shaped metal body, provided, at one end, with a cutting edge and, at the opposite end, with a hub 18, designed to receive a pin for connecting to forks belonging to the rotating drum 15.

According to preferred but non-limiting embodiments of the invention, the peripheral shredder knives 16 can have a spoon-shaped body or consist of two or more laminar elements substantially in the shape of a "Y".

The shredder counter-knives 17 usually consist of metal plates projecting towards the shredder knives 16, with which they cooperate to crush and finely grind the residual materials.

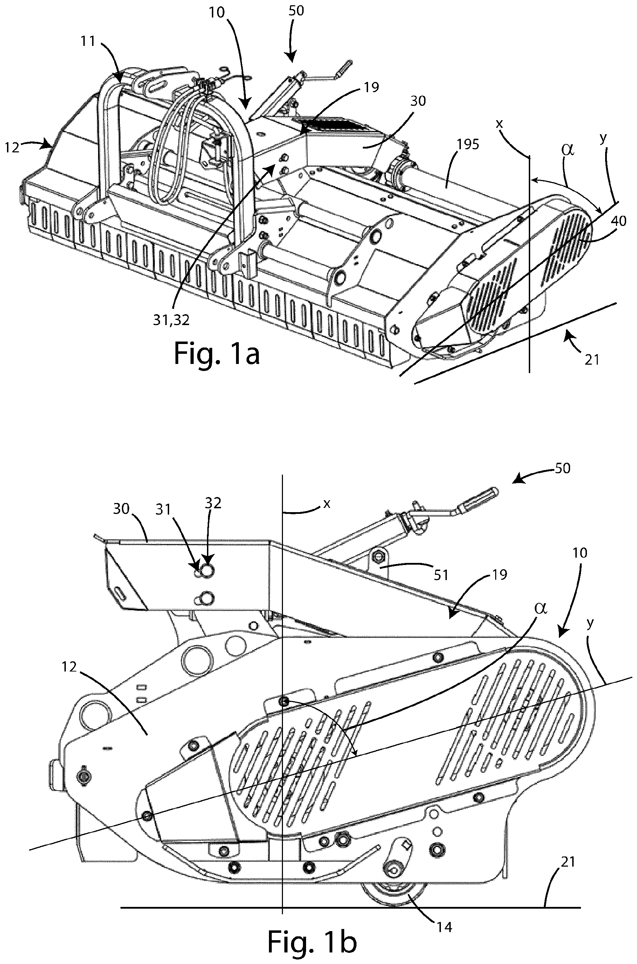

The rotating drum 15 of the shredding unit 23 is driven by means of a device for lateral transmission, for example of the belt and/or pulley type or by a motor unit of the operating machine, to which the shredder is connected. According to preferred embodiments, as shown in Figures 1a and 1b, the above-mentioned belt and/or pulley for driving the shredding unit 23 is placed inside a casing 40, preferably rectangular or ellipsoidal in shape, arranged on one of the side plates 12; advantageously the above-mentioned casing 40 is designed to contain said belt and/or pulley and protect it during the use of the shredding machine.

Advantageously, the above-mentioned lateral transmission device, arranged on at least one of the side plates 12, is inclined on the plate 12 by an acute angle α, advantageously greater than 45°, identified between a first Y axis passing through one of the axes of symmetry of the casing 40 itself and a second axis X perpendicular to the ground 21, as shown in Figures 1a and 1b; this positioning advantageously allows a final design of the above-mentioned shredding machine which is lower with respect to the prior art and therefore more compact, linear and retractable, so that, advantageously, the overall height between the two plates 12 is almost equal between the right and left.

Alternatively, the shredding machine can also be equipped with an autonomous motorisation unit designed to make it self-propelled. Moreover, the rotating drum 15 and the rear guide roller 14 are supported on the plates 12.

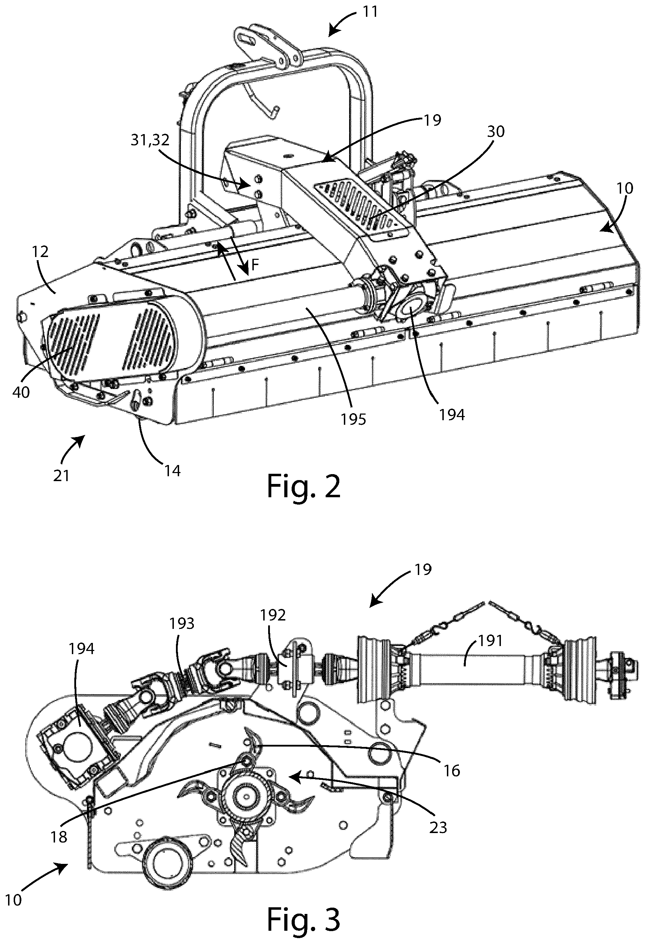

According to preferred embodiments, the above-mentioned belts and/or pulleys for driving the shredding unit 23 are moved and tensioned, as can be seen in detail in Figures 2 and 3, through the translation of a transmission unit 19.

In detail, the transmission unit 19 is placed at the frame 10 and is integrated into a single robust structure 30 which contains it in such a way as to create a single body with the transmission unit 19 itself, thus facilitating, again advantageously, the adjustment of the belts during rotation and therefore during their operation.

In particular, again in an advantageous manner, since the transmission unit 19 is integrated in the above-mentioned structure 30, the latter is to be considered an integral part of the transmission unit 19, particularly in the phase of tensioning the belts present in the respective casings 40, in turn arranged on the above-mentioned side plates 12, as will be described in more detail below. In fact, the presence of a single piece composed of the structure 30 and the transmission unit 19 integrated in it, also allows for a simpler belt tensioning with respect to the prior art wherein, in order to obtain the same technical effect, it is necessary to configure a plurality of elements with the consequent problems of bulkiness of the parts and greater difficulty of use.

Advantageously, the above-mentioned structure 30 comprises a plurality of slots 31 designed to be connected with a respective plurality of pins 32 which are arranged on the agricultural machine for supporting the structure 30.

More in detail, these slots 31 act as end stops for the above-mentioned pins 32 during the movement of the structure 30 and therefore of the transmission unit 19, during the tensioning of the belts, as will be seen below.

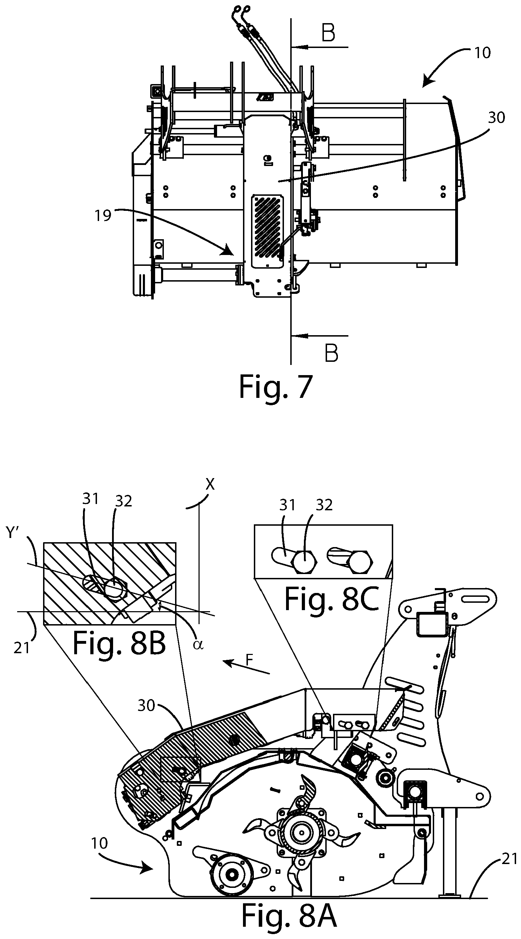

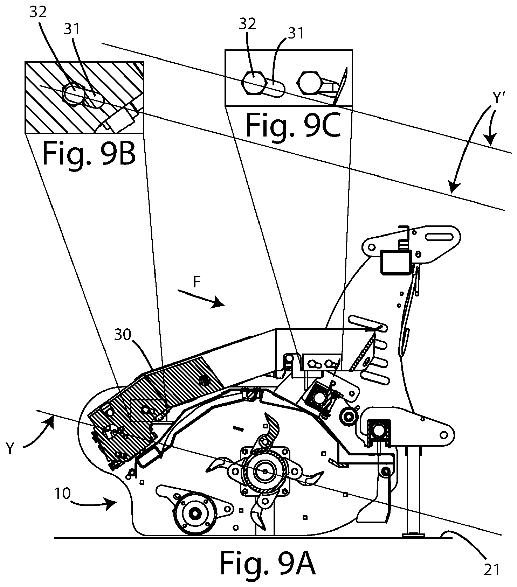

Advantageously, as can be seen in Figures 8A and 9A, in order to act as a single piece with the transmission unit 19, these slots 31 allow the structure 30, while remaining connected to the agricultural machine, to follow the movement of the transmission unit 19 of the belts arranged therein and therefore the movement of the transmission unit 19 between a first position (Fig. 8A) to a second position (Fig. 9A), according to a direction F parallel to the above-mentioned first axis Y.

In particular, in order to allow a unitary movement of the structure 30, together with the transmission unit 19, during the tensioning of the belts, as shown in detail in Figures 8A-8C and 9A-9C and as previously described, the above-mentioned slots 31 have the same inclination as the lateral transmission device, for example a belt, present in the relative casing 40 and arranged on at least one of the side plates 12. In particular, with reference to Figure 8B, the plurality of slots 31 is inclined by an acute angle α, advantageously, greater than 45°, identified between a third axis Y' parallel to the first axis Y as described above and the second axis X perpendicular to the ground 21.

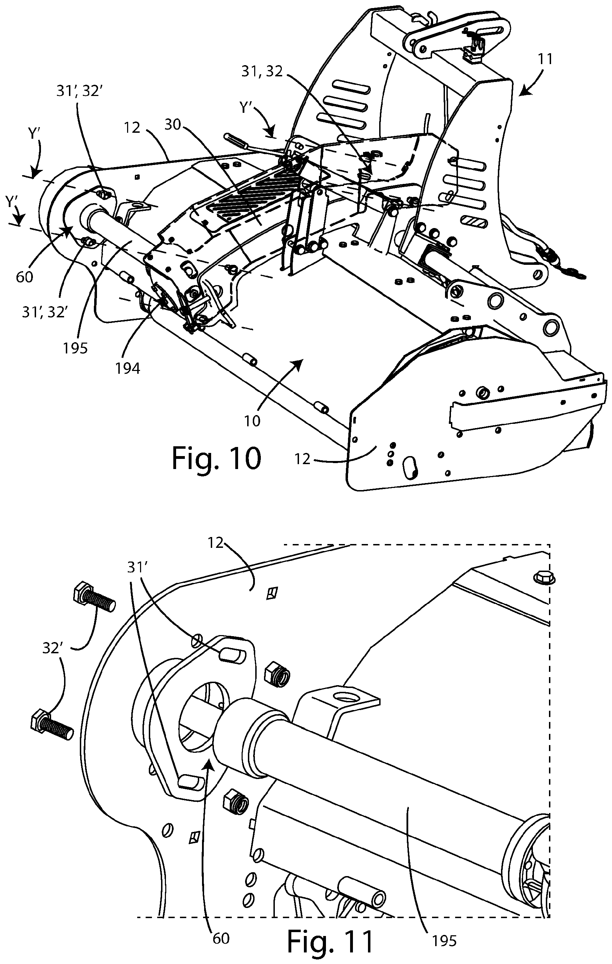

In addition, a further plurality of slots 31', similar in shape and operation to the one described above, is also placed on an accessory 60 which is made integral with the relative plate 12, on the side of the multiplier 194, thanks to relative further pins 32', as shown in Figures 10 and 11. In the case in question, the further pins 32' are designed to be inserted into the further plurality of slots 31'.

Similarly to what has been said previously, the further slots 31' positioned on the accessory 60 are also inclined by an acute angle α, identified on the above-mentioned third axis Y' parallel to the first axis Y and participate and are designed to favour and regulate the tensioning of the belts. Advantageously, as can be seen in figures 10 and 11, in preferred and non-limiting embodiments, there are two such slots 31' placed on the accessory 60.

Advantageously, the above-mentioned transmission unit 19 comprises, in a single piece and as an integral part of the transmission unit 19, a main cardan 191 which, not being a fixed integral element, comprises a first free end facing in the direction of said means 11 for attaching or fixing a towing machine, and a second end, opposite the above-mentioned first free end, connected to an intermediate shaft 192, in particular a shaft which acts as a power take-off; the above-mentioned main cardan 191 is able to transmit the motion signal to the intermediate shaft 192. Furthermore, according to other embodiments such intermediate shaft 192 can be a bearing type support.

Again advantageously, the intermediate shaft 192 is connected, with the end opposite to that connected to the main cardan 191, to a first joint 193; the first joint 193 is a transmission member comprising two cardan joints placed in communication and in symmetrical contact with each other. According to further preferred but non-limiting embodiments, the first joint 193 can advantageously be of the elastic type.

Advantageously, the presence of a first joint, comprising two cardan joints as described above, allows the shredding machine to have a more regular signal transfer with respect to the known solutions, in such a way that the working angles of the two cardan joints are almost equal and absorb any thrust coming from the transmission line and/or any related radial load, ensuring that, when said shredding machine is connected to an operating machine, it is perceived, on a mechanical level, as a natural extension of the operating machine and therefore not as an accessory.

Furthermore, the first joint 193 is connected in turn, on the opposite side with respect to the shaft 192, to a multiplier 194 of the mobile type, designed for multiplying and transmitting the signal coming from the transmission line to the belts and/or pulleys, preferably through a second cardan joint 195. Advantageously, the above-mentioned transmission unit 19 can be moved, for example by means of movement means, such as cardans, in the direction F, a direction almost parallel to the position of the transmission unit 19 itself, to tension and move in an optimum manner the above-mentioned belts and/or pulleys are optimal, as shown in Figure 2.

Operationally, inside the shredding unit 23 and inside the frame 10, the residual materials are crushed and shredded between the knives 16 and the counter-knives 17 and, subsequently, due to the centrifugal force developed by the rotation of the drum 15, they are pushed on the ground 21 at the guide roller 14.

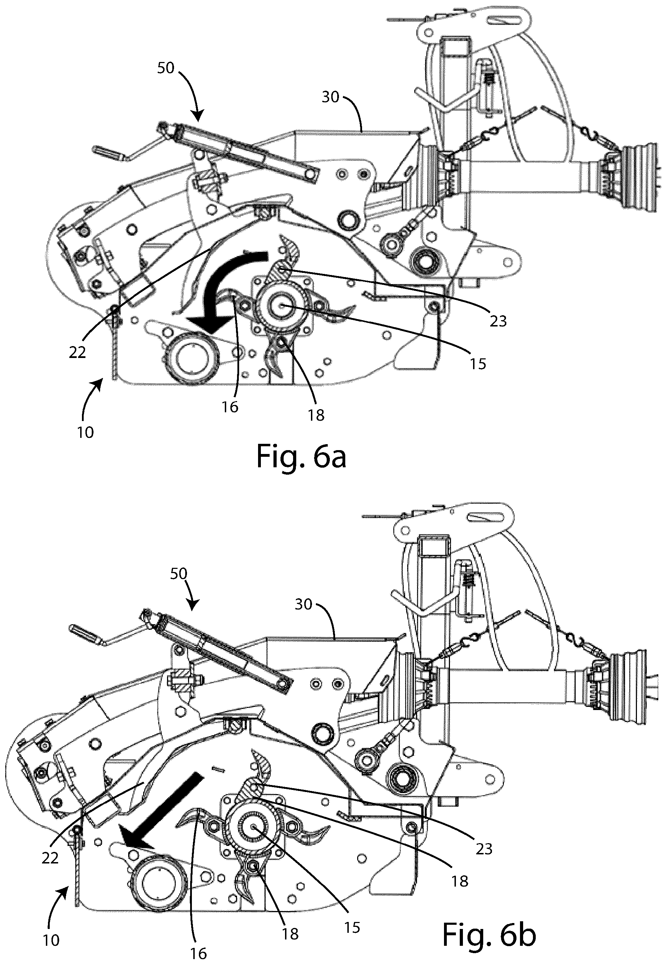

According to the invention, inside the frame 10 and preferably at an area opposite the connection area of the attachment means 11, it is possible to insert a shaped deflector 22, which, in a closed position (such as that shown in Fig. 6b) allows, due to its shape, the above-mentioned residual material to be conveyed, which is already shredded after a first passage inside the shredding unit 23, again inside the shredding unit 23 and, therefore, inside the rotor 15 (turbo-chopper or double crushing position), before placing it on the ground 21.

Figure 6b shows, on the other hand, a second operating position of the deflector 22, which is raised, so as to convey the above-mentioned residual material to the rear and outside the shredding machine, beyond the roller 14, after it has carried out only one passage inside the shredding unit 23 (single crushing position).

In this way, it is possible to create a variable volume chamber inside the frame 10 of the shredding machine, without the frame 10 having any openings and using a single door of the shaped deflector 22, without adding portions and/or external pieces.

It is thus possible, by means of a simple mechanical actuation of the deflector 22 which can be achieved by connecting to a handling means, in particular an external crank 50 or jack, to obtain the discharge of the residual material 20 behind the guide roller 14, immediately after the collection and the conveying of the same residual material 20 inside the shredding unit 23 (Fig. 6a), or obtain the discharge of the residual material 20 in front of the roller 14, inside the rotor 15, in such a way as to further shred the above-mentioned residual material during a second passage in the shredding unit 23 (Fig. 6b).

Advantageously, the above-mentioned external crank or jack 50 is mounted on a shock-absorber arm 51 which acts as a buffer and said arm 51 is made, according to preferred embodiments, of rubbery or elastic materials such as, for example, a spring.

According to other embodiments, the above-mentioned actuation of the deflector 22 can be of the electric or hydraulic type and is also achievable through a possible motorisation unit of the operating machine.

This particular processing method therefore allows the shredding, in an optimal manner, of both humid and abundant material (with the deflector 22 in the raised position and free discharge of the material behind the roller 14) and dry and hard material (with the deflector 22 in the lowered position and conveying the material inside the rotor 15 for a second passage in the shredding unit 23).

The above-mentioned operations also take place with the shredding machine always and completely closed, in order to maintain a compact and solid structure, and without adding external pieces.

The characteristics of the improved agricultural machine for the cutting and crushing of residual materials, according to the invention, clearly emerge from the description, as do the advantages thereof.

## Claims

1. An improved agricultural machine for cutting and crushing residual materials, comprising at least one frame (10), inside which at least one shredding unit (23) is installed, which includes at least one rotating drum or rotor (15), designed for collecting from the ground (21) and shredding said residual materials before depositing them again on the ground (21) suitably shredded and/or chopped, wherein at least one shaped deflector (22) is fixed on said frame (10), which can be operated in at least two positions, at which the residual materials are, respectively, conveyed directly onto the ground (21) after having made a single passage inside said shredding unit (23), or conveyed inside said rotor (15), in order to make said residual materials (20) perform at least a second passage inside said shredding unit (23), wherein at least one door is associated with said shaped deflector (22), connected to said frame (10), which extends up to the ground (21) so as to identify a closed chamber, with variable volume, inside which said rotating drum (15) is installed;
said rotating drum (15) being driven, by means of a lateral transmission device, comprising a belt and/or pulley, wherein said belt and/or pulley is moved and tensioned through a transmission unit (19) placed at said frame (10),
**characterised in that** said transmission unit (19) is integrated in a single structure (30) of said frame (10) in such a way as to make with said structure (30) a single piece during the adjustment/tensioning of said belt and/or pulley wherein said transmission unit (19) comprises:
- a main cardan (191) designed to transmit a motion signal;
- a shaft (192), which forms a power take-off, having a first end connected to said main cardan (191), in such a way as to receive said signal, and a second end, opposite to said first end, for the transmission of said signal;
- a first joint (193) comprising two cardan joints placed in communication and in symmetrical contact with each other, wherein said first joint (193) comprises an end connected to said second end of said shaft (192), to facilitate the transmission of said signal, in such a way that the working angles of said two cardan joints are practically equal;
- a multiplier (194) connected to a further end of said first joint (193), opposite to said end connected to said shaft (192), wherein said multiplier (194) is designed to multiply and transmit said signal up to said belt and/or pulley.

2. The agricultural machine according to claim 1, **characterised in that** said structure (30) comprises a plurality of slots (31; 31') designed to be connected and to act as end stops for a respective plurality of pins (32; 32'), arranged on said agricultural machine, during the movement of said structure (30) and of said tensioning unit (19) in the tensioning of said belt, between a first and a second position, according to a direction (F) parallel to said first axis (Y).

3. The agricultural machine according to claim 1, **characterised in that** said multiplier (194) is designed to multiply and transmit said signal up to said belt and/or pulley through a second cardan joint (195).

4. The agricultural machine according to any one of the preceding claims, **characterised in that** said frame (10) has side plates (12) and means (11) for the attachment to a towing machine to which a first free end of said main cardan (191) is connected, opposite to said end of said cardan (191) connected to said shaft (192) and wherein, said agricultural machine also includes at least one guide roller (14), which allows its advancement on the ground (21), on which there are said residual materials to be collected and shredded.

5. The agricultural machine according to claim 2, **characterised in that** it comprises an accessory (60) comprising said plurality of slots (31') and being made integral, on the side of the multiplier (194), to said side plates (12) by means of said pins (32') designed to be inserted in said plurality of slots (31 ').6. The agricultural machine according to any one of the preceding claims, **characterised in that** said belt and/or pulley is placed inside a rectangular or ellipsoidal casing (40); said casing (40) being positioned on at least one of said side plates (12) and being inclined by an acute angle (α), greater than 45°, identified between a first axis (Y) passing through one of the symmetry axes of said casing (40) and a straight line (X) perpendicular to said ground (21).

6. The agricultural machine according to any one of the preceding claims, **characterised in that** said transmission unit (19) can be moved, by means of movement means, in a direction (F) almost parallel to said transmission unit (19), to put in tension and in movement said belt and/or pulley.

7. The agricultural machine according to claim 2, **characterised in that** said plurality of slots (31; 31') have the same inclination as said belt and therefore of said casing (40) containing said belt. 9. The agricultural machine according to any one of the preceding claims, **characterised in that** said deflector (22) is moved by means of handling means (50) and in particular by means of a crank or jack connected to said deflector (22).

8. The agricultural machine according to the preceding claim, **characterised in that** said crank or jack is mounted on a shock absorber arm (51) made of rubbery or elastic materials.

9. The agricultural machine according to claim 3, **characterised in that** said residual materials are conveyed on the ground (21), behind said guide roller (14), and/or inside said rotating drum or rotor (15), in front of said guide roller (14), without further addition of external pieces.

10. The agricultural machine according to claim 3, **characterised in that** said rotating drum (15) and said guide roller (14) are supported on said plates (12).

11. An improved agricultural machine according to claim 1, **characterised in that** said rotating drum or rotor (15) is provided with peripheral shredder knives (16), which cooperate with respective shredder counter-knives (17), associated with internal portions of said frame (10) of the agricultural machine.

12. The agricultural machine according to claim 1, **characterised in that** said rotating drum or rotor (15) of said shredding unit (23) is driven, by means of a transmission, by a motor unit of said towing machine or by an autonomous motorisation unit (19).

13. An agricultural machine according to claim 1, **characterised in that** said transmission unit (19) uniquely participates in the tensioning of the lateral transmission, of said belt and/or pulley through its own translation.

## Patentansprüche

1. Verbesserte landwirtschaftliche Maschine zum Schneiden und Zerkleinern von Reststoffen, umfassend mindestens einen Rahmen (10), in dem mindestens eine Zerkleinerungseinheit (23) installiert ist, die mindestens eine drehende Trommel oder einen Rotor (15) beinhaltet, die bzw. der zum Sammeln von dem Boden (21) und zum Zerkleinern der Reststoffe bestimmt ist, bevor sie auf geeignete Weise zerkleinert und/oder zerhackt wieder auf dem Boden (21) abgelegt werden, wobei mindestens ein geformter Ablenker (22) an dem Rahmen (10) befestigt ist, der in mindestens zwei Positionen betrieben werden kann, in denen die Reststoffe, jeweils direkt auf den Boden (21) befördert werden, nachdem sie einen einzigen Durchgang innerhalb der Zerkleinerungseinheit (23) gemacht haben, oder innerhalb des Rotors (15) befördert werden, um zu veranlassen, dass die Reststoffe (20) mindestens einen zweiten Durchgang innerhalb der Zerkleinerungseinheit (23) machen, wobei mindestens eine Tür mit dem geformten Ablenker (22) assoziiert ist, der mit dem Rahmen (10) verbunden ist, der sich bis zu dem Boden (21) erstreckt, um eine geschlossene Kammer mit variablem Volumen zu bilden, in der die drehende Trommel (15) installiert ist;
wobei die drehende Trommel (15) mittels einer seitlichen Übertragungsvorrichtung angetrieben wird, umfassend einen Riemen und/oder eine Riemenscheibe, wobei der Riemen und/oder die Riemenscheibe durch eine am Rahmen (10) platzierte Übertragungseinheit (19) bewegt und gespannt wird,
**dadurch gekennzeichnet, dass** die Übertragungseinheit (19) auf eine Weise in einer einzigen Struktur (30) des Rahmens (10) integriert ist, um mit der Struktur (30) während der Einstellung/Spannung des Riemens und/oder der Riemenscheibe ein einziges Stück zu bilden, wobei die Übertragungseinheit (19) Folgendes umfasst:
- eine Hauptkardanwelle (191), die konstruiert ist, um ein Bewegungssignal zu übertragen;
- eine Welle (192), die einen Nebenabtrieb bildet, der ein erstes Ende, das mit der Hauptkardanwelle (191) verbunden ist, um das Signal zu empfangen, und ein zweites Ende gegenüber dem ersten Ende zur Übertragung des Signals aufweist;
- ein erstes Gelenk (193), umfassend zwei Kardangelenke, die miteinander in Verbindung und in symmetrischem Kontakt sind, wobei das erste Gelenk (193) ein Ende umfasst, das mit dem zweiten Ende der Welle (192) verbunden ist, um die Übertragung des Signals zu ermöglichen, sodass die Arbeitswinkel der zwei Kardangelenke praktisch gleich sind;
- ein Vervielfacher (194), der mit einem weiteren Ende des ersten Gelenks (193) verbunden ist, das dem mit der Welle (192) verbundenen Ende gegenüberliegt, wobei der Vervielfacher (194) konstruiert ist, um das Signal zu vervielfachen und an den Riemen und/oder die Riemenscheibe zu übertragen.

2. Landwirtschaftliche Maschine nach Anspruch 1, **dadurch gekennzeichnet, dass** die Struktur (30) eine Vielzahl von Schlitzen (31; 31') umfasst, die konstruiert sind, um mit einer entsprechenden Vielzahl von Stiften (32; 32'), die an der landwirtschaftlichen Maschine angeordnet sind, während der Bewegung der Struktur (30) und der Spanneinheit (19) beim Spannen des Riemens zwischen einer ersten und einer zweiten Position gemäß einer Richtung (F) parallel zu der ersten Achse (Y) verbunden zu werden und als Endanschläge zu wirken.

3. Landwirtschaftliche Maschine nach Anspruch 1, **dadurch gekennzeichnet, dass** der Vervielfältiger (194) konstruiert ist, um das Signal zu vervielfachen und über ein zweites Kardangelenk (195) an den Riemen und/oder die Riemenscheibe zu übertragen.

4. Landwirtschaftliche Maschine nach einem der vorhergehenden Ansprüche, **dadurch gekennzeichnet, dass** der Rahmen (10) Seitenplatten (12) und Einrichtungen (11) Anbringen an einer Zugmaschine aufweist, mit der ein erstes freies Ende der Hauptkardanwelle (191) verbunden ist, das dem Ende der Kardanwelle (191), das mit der Welle (192) verbunden ist, gegenüberliegt, und wobei die landwirtschaftliche Maschine auch mindestens eine Führungsrolle (14) umfasst, die ihre Vorwärtsbewegung auf dem Boden (21) ermöglicht, auf dem sich die zu sammelnden und zu zerkleinernden Reststoffe befinden.

5. Landwirtschaftliche Maschine nach Anspruch 2, **dadurch gekennzeichnet, dass** sie ein Zubehör (60) umfasst, umfassend die Vielzahl von Schlitzen (31') und auf der Seite des Vervielfachers (194) mit den Seitenplatten (12) mittels der Stifte (32'), die dazu bestimmt sind, in die Vielzahl von Schlitzen (31') eingeführt zu werden, integriert ist.6. Landwirtschaftliche Maschine nach einem der vorhergehenden Ansprüche, **dadurch gekennzeichnet, dass** der Riemen und/oder die Riemenscheibe im Inneren eines rechteckigen oder ellipsenförmigen Gehäuses (40) platziert ist; wobei das Gehäuse (40) auf mindestens einer der Seitenplatten (12) positioniert ist und um einen spitzen Winkel (α) von mehr als 45° geneigt ist, der zwischen einer ersten Achse (Y), die durch eine der Symmetrieachsen des Gehäuses (40) verläuft, und einer Geraden (X) senkrecht zum Boden (21) festgelegt ist.

6. Landwirtschaftliche Maschine nach einem der vorhergehenden Ansprüche, **dadurch gekennzeichnet, dass** die Übertragungseinheit (19) mittels einer Bewegungseinrichtung in einer Richtung (F) nahezu parallel zur Übertragungseinheit (19) bewegt werden kann, um den Riemen und/oder die Riemenscheibe in Spannung und Bewegung zu versetzen.

7. Landwirtschaftliche Maschine nach Anspruch 2, **dadurch gekennzeichnet, dass** die Vielzahl von Schlitzen (31; 31') die gleiche Neigung wie das Band und somit das Gehäuse (40), das das Band enthält, aufweisen. 9. Landwirtschaftliche Maschine nach einem der vorhergehenden Ansprüche, **dadurch gekennzeichnet, dass** der Ablenker (22) mittels einer Handhabungseinrichtung (50) und insbesondere mittels einer mit dem Ablenker (22) verbundenen Kurbel oder eines Hebers bewegt wird.

8. Landwirtschaftliche Maschine nach dem vorhergehenden Anspruch, **dadurch gekennzeichnet, dass** die Kurbel oder der Heber an einem Stoßdämpferarm (51) aus gummiartigem oder elastischem Material montiert ist.

9. Landwirtschaftliche Maschine nach Anspruch 3, **dadurch gekennzeichnet, dass** die Reststoffe auf dem Boden (21) hinter der Führungswalze (14) und/oder innerhalb der drehenden Trommel oder des Rotors (15) vor der Führungswalze (14) befördert werden, ohne dass weitere externe Teile hinzugefügt werden.

10. Landwirtschaftliche Maschine nach Anspruch 3, **dadurch gekennzeichnet, dass** die drehende Trommel (15) und die Führungsrolle (14) auf den Platten (12) gelagert sind.

11. Verbesserte landwirtschaftliche Maschine nach Anspruch 1, **dadurch gekennzeichnet, dass** die drehende Trommel oder der Rotor (15) mit peripheren Zerkleinerungsmessern (16) versehen ist, die mit entsprechenden Zerkleinerungsgegenmessern (17) zusammenwirken, die mit inneren Abschnitten des Rahmens (10) der landwirtschaftlichen Maschine verbunden sind.

12. Landwirtschaftliche Maschine nach Anspruch 1, **dadurch gekennzeichnet, dass** die drehende Trommel oder der Rotor (15) der Zerkleinerungseinheit (23) mittels eines Getriebes von einer Motoreinheit der Zugmaschine oder von einer autonomen Motorisierungseinheit (19) angetrieben wird.

13. Landwirtschaftliche Maschine nach Anspruch 1, **dadurch gekennzeichnet, dass** die Übertragungseinheit (19) durch ihre eigene Verschiebung auf einmalige Weise am Spannen der seitlichen Übertragung des Riemens und/oder der Riemenscheibe beteiligt ist.

## Revendications

1. Machine agricole améliorée pour la coupe et le broyage de matériaux résiduels, comprenant au moins un châssis (10), à l'intérieur duquel est installée au moins une unité de broyage (23), qui comprend au moins un tambour rotatif ou rotor (15), conçu pour recueillir sur le sol (21) et broyer lesdites matériaux résiduels avant de les redéposer sur le sol (21) convenablement broyées et/ou hachées, dans lequel au moins un déflecteur façonné (22) est fixé sur ledit châssis (10), qui peut être actionné dans au moins deux positions, dans lesquelles les matériaux résiduels sont, respectivement, acheminés directement sur le sol (21) après avoir effectué un seul passage à l'intérieur de ladite unité de broyage (23), ou acheminés à l'intérieur dudit rotor (15), afin de faire effectuer à ces matériaux résiduels (20) au moins un second passage à l'intérieur de ladite unité de broyage (23), dans lequel au moins une porte est associée audit déflecteur façonné (22), relié audit châssis (10), qui s'étend jusqu'au sol (21) de manière à identifier une chambre fermée, de volume variable, à l'intérieur de laquelle est installé ledit tambour rotatif (15);
ledit tambour rotatif (15) étant entraîné, au moyen d'un dispositif de transmission latérale, comprenant une courroie et/ou une poulie, cette courroie et/ou cette poulie étant déplacée et tendue par une unité de transmission (19) placée sur le châssis (10), **caractérisée en ce que** ladite unité de transmission (19) est intégrée dans une structure unique (30) dudit châssis (10) de manière à faire avec ladite structure (30) une seule pièce pendant le réglage/tension de ladite courroie et/ou poulie, dans laquelle ladite unité de transmission (19) comprend:
- un cardan principal (191) conçu pour transmettre un signal de mouvement;
- un arbre (192), qui forme une prise de force, ayant une première extrémité reliée audit cardan principal (191), de manière à recevoir ledit signal, et une seconde extrémité, opposée à ladite première extrémité, pour la transmission dudit signal;
- un premier joint (193) comprenant deux joints de cardan placés en communication et en contact symétrique l'un avec l'autre, dans lequel ledit premier joint (193) comprend une extrémité reliée à ladite deuxième extrémité dudit arbre (192), pour faciliter la transmission dudit signal, de telle sorte que les angles de travail desdits deux joints de cardan soient pratiquement égaux;
- un multiplicateur (194) relié à une autre extrémité du premier joint (193), opposée à l'extrémité reliée à l'arbre (192), dans lequel le multiplicateur (194) est conçu pour multiplier et transmettre le signal à la courroie et/ou à la poulie.

2. Machine agricole selon la revendication 1, **caractérisée en ce que** ladite structure (30) comprend une pluralité de fentes (31; 31') destinées à être connectées et à servir de butées à une pluralité respective d'axes (32; 32'), disposés sur ladite machine agricole, lors du déplacement de ladite structure (30) et de ladite unité de tension (19) dans la tension de ladite courroie, entre une première et une deuxième position, selon une direction (F) parallèle audit premier axe (Y).

3. Machine agricole selon la revendication 1, **caractérisée en ce que** ledit multiplicateur (194) est conçu pour multiplier et transmettre ledit signal jusqu'à ladite courroie et/ou poulie par l'intermédiaire d'un second joint de cardan (195).

4. Machine agricole selon l'une quelconque des revendications précédentes, **caractérisée en ce que** ledit châssis (10) comporte des plaques latérales (12) et des moyens (11) de fixation à une machine de remorquage à laquelle est reliée une première extrémité libre dudit cardan principal (191), opposée à ladite extrémité dudit cardan (191) reliée audit arbre (192) et dans laquelle, ladite machine agricole comporte également au moins un rouleau de guidage (14), qui permet son avancement sur le sol (21), sur lequel se trouvent lesdites matériaux résiduels à collecter et à broyer.

5. Machine agricole selon la revendication 2, **caractérisée en ce qu'**elle comprend un accessoire (60) comportant ladite pluralité de fentes (31') et s'intégrant, du côté du multiplicateur (194), auxdites plaques latérales (12) au moyen desdits ergots (32') destinés à être insérés dans ladite pluralité de fentes (31') .6. Machine agricole selon l'une quelconque des revendications précédentes, **caractérisée en ce que** ladite courroie et/ou poulie est placée à l'intérieur d'un carter (40) rectangulaire ou ellipsoïdal; ledit carter (40) étant positionné sur au moins l'une desdites plaques latérales (12) et étant incliné d'un angle aigu (α), supérieur à 45°, identifié entre un premier axe (Y) passant par l'un des axes de symétrie dudit carter (40) et une droite (X) perpendiculaire audit sol (21).

6. Machine agricole selon l'une quelconque des revendications précédentes, **caractérisée en ce que** ladite unité de transmission (19) peut être déplacée, au moyen de moyens de déplacement, dans une direction (F) presque parallèle à ladite unité de transmission (19), pour mettre en tension et en mouvement ladite courroie et/ou poulie.

7. Machine agricole selon la revendication 2, **caractérisée en ce que** ladite pluralité de fentes (31; 31') a la même inclinaison que ladite courroie et donc dudit carter (40) contenant ladite courroie. 9. Machine agricole selon l'une quelconque des revendications précédentes, **caractérisée en ce que** ledit déflecteur (22) est déplacé au moyen de moyens de manutention (50) et notamment au moyen d'une manivelle ou d'un vérin relié audit déflecteur (22).

8. Machine agricole selon la revendication précédente, **caractérisée par le fait que** ladite manivelle ou ledit vérin est monté sur un bras amortisseur (51) en matériaux caoutchouteux ou élastiques.

9. Machine agricole selon la revendication 3, **caractérisée par le fait que** lesdites matériaux résiduels sont transportés sur le sol (21), derrière ledit rouleau de guidage (14), et/ou à l'intérieur dudit tambour rotatif ou rotor (15), devant ledit rouleau de guidage (14), sans ajout supplémentaire de pièces externes.

10. Machine agricole selon la revendication 3, **caractérisée par le fait que** ledit tambour rotatif (15) et ledit rouleau de guidage (14) sont supportés par lesdites plaques (12).

11. Machine agricole améliorée selon la revendication 1, **caractérisée par le fait que** ledit tambour rotatif ou rotor (15) est pourvu de couteaux de broyage périphériques (16), qui coopèrent avec des contre-couteaux de broyage respectifs (17), associés à des parties internes dudit châssis (10) de la machine agricole.

12. Machine agricole selon la revendication 1, **caractérisée en ce que** ledit tambour rotatif ou rotor (15) de ladite unité de broyage (23) est entraîné, au moyen d'une transmission, par une unité motrice de ladite machine de remorquage ou par une unité de motorisation autonome (19).

13. Machine agricole selon la revendication 1, **caractérisée en ce que** ladite unité de transmission (19) participe de manière unique à la tension de la transmission latérale, de ladite courroie et/ou poulie par sa propre translation.
